# EUROPÄISCHE PATENTSCHRIFT

(11) **EP 3 985 470 B1**
(45) Veröffentlichungstag und Bekanntmachung des Hinweises auf die Patenterteilung: **08.11.2023**
(21) Anmeldenummer: 21197993.5
(22) Anmeldetag: 21.09.2021
(51) Int. Cl.: G05D 1/02, B60L 50/60, B60L 53/30, B60L 53/66

(54) **VERFAHREN ZUR REINIGUNG EINER FLÄCHE MITTELS EINES BODENREINIGUNGSSYSTEMS**
METHOD FOR CLEANING A SURFACE BY MEANS OF A FLOOR CLEANING SYSTEM
PROCÉDÉ DE NETTOYAGE D'UNE SURFACE AU MOYEN D'UN SYSTÈME DE NETTOYAGE DU SOL

(30) Priorität: 19.10.2020 DE 102020127411
(43) Veröffentlichungstag der Anmeldung: 20.04.2022
(73) Patentinhaber: Miele & Cie. KG, 33332 Gütersloh (DE)
(72) Erfinder: Budke, Mathis, 33615 Bielefeld (DE); Stroop, Nicolas, 33602 Bielefeld (DE)

(56) Entgegenhaltungen:
- US-A1- 2011 004 339
- US-A1- 2019 212 752
- US-A1- 2020 305 670

## Beschreibung

Die Erfindung betrifft ein Verfahren zur Reinigung einer Fläche mittels eines Bodenreinigungssystems.

Die aus dem Stand der Technik bekannten Bodenreinigungssysteme sind dazu geeignet, Flächen, insbesondere in Form von Fußböden, zu reinigen. Typischerweise bestehen derartige Bodenreinigungssysteme aus mehreren Einzelsystemen, die jeweils eine autonome Bodenreinigungseinheit und eine der Bodenreinigungseinheit zugeordnete Lade- und Reinigungsstation umfassen. An dieser Lade- und Reinigungsstation findet eine Aufladung, eine Absaugung und eine Reinigung der Bodenreinigungseinheit statt. Jedem Einzelsystem wird eine zu reinigende Fläche zugeordnet.

Es hat sich nunmehr als nachteilig herausgestellt, dass derartige Bodenreinigungssysteme sehr kostenintensiv sind, da pro Einzelsystem jeweils alle Systemkomponenten der Lade- und Reinigungsstation mit all seinen Funktionen vorgehalten werden müssen. Hinzu kommt ein erhöhter Arbeitsaufwand, da jede einzelne Lade- und Reinigungsstation täglich gereinigt und in regelmäßigen Abständen gewartet werden muss. Dies hat einen hohen Personalaufwand zur Folge. Ebenfalls müssen mehr Ersatzteile für jede einzelne Reinigungsstation bereitgehalten werden.

Ein Bodenreinigungssystem mit mehreren Bodenreinigungseinheiten und den Bodenreinigungseinheiten zugeordneten Lade- und Reinigungsstationen nimmt zudem sehr viel Platz in Anspruch, der häufig nicht gegeben ist. Insbesondere bei handelsgewerblich genutzten Flächen stellt jeder belegte Quadratmeter, der nicht zur Ausstellung von Verkaufsprodukten genutzt werden kann, einen wirtschaftlichen Nachteil dar. Somit ist es wünschenswert, die von dem Bodenreinigungssystem genutzte Fläche so klein wie möglich zu halten.

Aus dem Stand der Technik sind ebenfalls Einzelsysteme eines Bodenreinigungssystems bekannt, die sich aus einer Bodenreinigungseinheit und einer Ladestation zusammensetzen. Die jeweiligen Bodenreinigungseinheiten müssen von Hand abgesaugt und gereinigt werden, da keine Reinigungsstation vorhanden ist. Diese Art der Bodenreinigungssysteme bringt ebenfalls die zuvor genannten Nachteile mit sich.

Die US 2019 212752 A1 offenbart ein Bodenreinigungssystem, welches sich aus zwei Bodenreinigungseinheiten und einer Ladestation zusammensetzt. Die Bodenreinigungseinheiten bearbeiten in sequentieller Reihenfolge die Bodenfläche, sodass ein Bodenreinigungseinheit die Bodenfläche reinigt, während das zweite Bodenreinigungsgerät an der Ladestation aufgeladen wird. Die US 2011 004339 A1 offenbart ein

Bodenreinigungssystem, welches sich aus einer Bodenreinigungseinheit und einer Ladestation zusammensetzt. Die US 2020 305670 A1 offenbart ein Bodenreinigungssystem, welches sich aus mehreren Bodenreinigungseinheiten und Ladestationen zusammensetzt.

Der vorliegenden Erfindung liegt nunmehr die Aufgabe zugrunde, ein Verfahren bereitzustellen, mittels dessen ein Bodenreinigungssystem möglichst kostengünstig und platzsparend ausgestaltet werden kann.

Die zugrunde liegende Aufgabe wird erfindungsgemäß mittels eines Verfahrens mit den Merkmalen des Anspruchs 1 gelöst. Vorteilhafte Ausgestaltungen ergeben sich aus den zugehörigen Unteransprüchen.

Das erfindungsgemäße Verfahren zur Reinigung einer Fläche mittels eines Bodenreinigungssystem ist dadurch gekennzeichnet, dass das Bodenreinigungssystem
- zumindest zwei autonome Bodenreinigungseinheiten,
- zumindest eine Ladestation,
- zumindest eine Reinigungsstation und
- zumindest eine Recheneinheit,
aufweist, und die nachfolgenden Verfahrensschritte umfasst:
a) eine zentrale Recheneinheit erfasst Informationen der Bodenreinigungseinheiten;
b) die zentrale Recheneinheit verarbeitet die Informationen, und zwar derart dass eine Reihenfolge festgelegt wird, in der die betroffenen Bodenreinigungseinheiten mittels der Reinigungsstation bearbeitet werden sollen;
c) die zentrale Recheneinheit übermittelt Befehle an die betroffenen Bodenreinigungseinheiten, sodass diese die Reinigungsstation in der festgelegten Reihenfolge anfahren.

Mithilfe der erfindungsgemäßen Reinigungsstation können betroffene Bodenreinigungseinheiten bearbeitet, insbesondere abgesaugt und gereinigt, werden, wobei in der Regel die Reinigungsstation nur eine Bodenreinigungseinheit gleichzeitig bearbeiten kann. Ferner ist es erfindungsgemäß denkbar, dass die Reinigungsstation ebenfalls zum Auffüllen eines Wassertanks der Bodenreinigungseinheit eingesetzt werden kann. Gemäß der vorliegenden Erfindung sind mit den "betroffenen Bodenreinigungseinheiten" die Bodenreinigungseinheiten gemeint, bei denen ein Absaugen undloder eine Reinigung mittels der Reinigungsstation erforderlich ist.

Im Sinne der vorliegenden Anmeldung sind mindestens zwei autonome Bodenreinigungseinheiten einer Reinigungsstation zugeordnet. Es ist denkbar, dass das Bodenreinigungssystem mehrere Reinigungsstationen umfasst, wobei mehrere Bodenreinigungseinheiten einer Reinigungsstation zugeordnet sein können. Als besonders vorteilhaft hat sich beispielsweise herausgestellt, dass eine Reinigungsstation für die Reinigung von sieben Bodenreinigungseinheiten zuständig ist.

Die Zuordnung mehrerer Bodenreinigungseinheiten zu einer Reinigungsstation erfordert die Festlegung einer Reihenfolge, in der die betroffenen Bodenreinigungseinheiten die Reinigungsstation anfahren können. Erfindungsgemäß ist vorgesehen, dass die zentrale Recheneinheit anhand der erfassten Informationen diese Reihenfolge festlegt. Die zentrale Recheneinheit ist derart ausgestaltet, dass sie nach Festlegung einer Reihenfolge entsprechende Befehle an die betroffenen Bodenreinigungseinheiten übermittelt, sodass diese die Reinigungsstation in der festgelegten Reihenfolge anfahren. Vorteilhafterweise wird eine Warteliste mit den zu bearbeitenden Bodenreinigungseinheiten festgelegt, die auf Basis der ermittelten Reihenfolge aufgestellt wird.

Das erfindungsgemäße Bodenreinigungssystem bringt viele Vorteile mit sich. Die Anzahl der Reinigungsstationen kann auf ein Minimum reduziert werden, wodurch eine höhere Wirtschaftlichkeit erreicht wird als bei den aus dem Stand der Technik bekannten Bodenreinigungssystemen. Eine weitere Effizienssteigerung wird durch eine Zeitersparnis erzielt, da die Anzahl der zu wartenden und zu reinigenden Reinigungsstationen im Gegensatz zu im Stand der Technik bekannten Bodenreinigungssystemen geringer ist. Ein weiterer Vorteil des erfindungsgemäßen Bodenreinigungssystems besteht darin, dass aufgrund der geringeren Anzahl der Reinigungsstationen mehr freie Fläche zur Nutzung für andere Zwecke zur Verfügung steht.

Vorteilhaftersweise besitzt das Bodenreinigungssystem für jede Bodenreinigungseinheit eine eigene Ladestation, da der Ladeprozess der jeweiligen Bodenreinigungseinheit eine nicht unerhebliche Zeit in Anspruch nimmt. Sollten mehrere Bodenreinigungseinheiten von ein und derselben Ladestation geladen werden, würde dies unter Umständen dazu führen, dass die Bodenreinigungseinheiten zu einem vorgegebenen Zeitpunkt keine ausreichende Ladekapazität aufweisen, um die ausgewiesene Fläche zu reinigen. Sollten in Zukunft die Ladeprozesse beschleunigt werden können, ist es ebenfalls denkbar, dass die Anzahl der Ladestation reduziert wird. Da die Ladestationen sehr klein ausgeformt sein können, stellen diese keine großen Flächenanforderungen dar und bieten somit kein Hindernis für den Betreiber.

Vorzugsweise ist jede Bodenreinigungseinheit eindeutig mit einem Kennzeichen in der entsprechenden Recheneinheit hinterlegt, sodass eine Identifizierung der jeweiligen Bodenreinigungseinheit möglich ist.

Eine vorteilhafte Weiterentwicklung des erfindungsgemäßen Verfahrens sieht vor, dass die von der zentralen Recheneinheit erfassten Informationen Zustandsdaten der Bodenreinigungseinheiten umfassen, wobei die Recheneinheit anhand dieser Zustandsdaten einen Dringlichkeitswert für jede Bodenreinigungseinheit ermittelt, der eine Aussage über die Dringlichkeit zur Bearbeitung der jeweiligen Bodenreinigungseinheit mittels der Reinigungsstation macht. Anhand des Dringlichkeitswertes kann die zentrale Recheneinheit die Reihenfolge festlegen, in der die Bodenreinigungseinheiten die Reinigungsstation anfahren. Sollte beispielsweise der von der Recheneinheit ermittelte Dringlichkeitswert einer Bodenreinigungseinheit besonders hoch sein, wird die entsprechende Bodenreinigungseinheit in der Reihenfolge der Bearbeitung mittels der Reinigungsstation entsprechend höher eingestuft, sodass die Bodenreinigungseinheit die Reinigungsstation im Ergebnis zu einem früheren Zeitpunkt anfährt als eine Bodenreinigungseinheit mit einem niedrigeren Dringlichkeitswert.

Vorzugsweise erfasst die zentrale Recheneinheit kontinuierlich die Zustandsdaten der jeweiligen Bodenreinigungseinheit, so dass der Dringlichkeitswert der jeweiligen Bodenreinigungseinheit fortlaufend aktualisiert wird.

Eine alternative Weiterentwicklung des erfindungsgemäßen Verfahrens sieht vor, dass die von der zentralen Recheneinheit erfassten Informationen Dringlichkeitswerte umfassen, die von den Bodenreinigungseinheiten an die zentrale Recheneinheit übermittelt werden. Hierbei weisen die Bodenreinigungseinheiten jeweils eine ihnen zugeordnete dezentrale Rechenzeit auf, wobei die dezentralen Recheneinheiten jeweils Zustandsdaten der ihr zugeordneten Bodenreinigungseinheiten erfassen und aus diesen Zustandsdaten einen Dringlichkeitswert ermitteln können, der eine Aussage über die Dringlichkeit zur Bearbeitung der jeweiligen Bodenreinigungseinheit mittels der Reinigungsstation macht. Diese Dringlichkeitswerte werden vorzugsweise fortwährend, jeweils als Information an die zentrale Recheneinheit übermittelt. Bei dieser Alternative wird das Ermitteln des jeweiligen Dringlichkeitswertes für eine Bodenreinigungseinheit im Gegensatz zu der erstgenannten Alternative von der zentralen Recheneinheit auf die dezentrale Recheneinheit übertragen. Das heißt, dass die dezentralen Recheneinheiten die Zustandsdaten der ihr zugeordneten Bodenreinigungseinheiten erfassen und eigenständig aus diesen einen Dringlichkeitswert ermitteln. Dieser Dringlichkeitswert wird an die zentrale Recheneinheit übermittelt, sodass diese eine Reihenfolge festlegen kann, in der die Bodenreinigungseinheiten die Reinigungsstation anfahren. Vorzugsweise umfassen die Bodenreinigungseinheiten jeweils eine dezentrale Recheneinheit.

Eine vorteilhafte Weiterentwicklung der Erfindung sieht vor, dass die Informationen einer Bodenreinigungseinheit erst dann an die zentrale Recheneinheit übermittelt werden, wenn zumindest ein kritischer Zustandsdatenwert eine zuvor festgelegte Dringlichkeitsschwelle erreicht hat, wobei vorzugsweise die Dringlichkeitsschwelle dann erreicht ist, wenn der jeweilige kritische Zustandsdatenwert mindestens 75 %, vorzugsweise mindestes 85 %, weiter vorzugsweise mindestes 90 %, eines die Bearbeitung mittels der Reinigungsstation notwendig machenden Extremums erreicht hat. Die Dringlichkeitsschwelle kann vorzugsweise vom Anwender selbst bestimmt werden. Es ist beispielsweise denkbar, dass die Bodenreinigungseinheiten der zentralen Recheneinheit erst bei einem Füllgrad von 80 % des jeweiligen Staubbehälters ihre jeweilige Dringlichkeit übermitteln. Es bliebe dann noch genügend zeitlicher Puffer, um die jeweilige Bodenreinigungseinheit in die Reihenfolge zur Bearbeitung mittels der Reinigungsstation einzugliedern und mittels der Reinigungsstation zu bearbeiten, bevor der Staubbehälter zu 100 % gefüllt ist.

Im Sinne der vorliegenden Anmeldung betreffen kritische Zustandsdatenwerte, die Zustandsdatenwerte, die eine Bearbeitung der Bodenreinigungseinheit mittels der Reinigungsstation erforderlich machen. Als Beispiel seien hier der Füllstatus des Staubbehälters, ein Verschmutzungsgrad jeweiliger Reinigungsbürsten, ein Verschmutzungsgrad jeweiliger Sensoren und der Füllstatus eines Wassertanks angeführt.

Vorteilhafterweise legt die zentrale Recheneinheit angesichts neuer undloder geänderter Dringlichkeitswerte eine Neuordnung der Reihenfolge fest. Hierbei ist es unerheblich, ob die Dringlichtkeitswerte von den entsprechenden dezentralen Recheneinheiten oder von der zentralen Recheneinheit ermittelt werden. Dies bringt den Vorteil mit sich, dass eine bisher noch nicht in der zu bearbeitenden Reihenfolge der betroffenen Bodenreinigungseinheiten aufgenommene Bodenreinigungseinheit, die einen erhöhten Reinigungsbedarf und somit einen erhöhten Dringlichkeitswert aufweist, nachträglich in die Reihenfolge eingegliedert werden kann. Hierbei wird die entsprechende Bodenreinigungseinheit nicht automatisch an letzter Stelle der Reihenfolge aufgenommen, sondern die Reihenfolge der mittels der Reinigungsstation zu bearbeitenden Bodenreinigungseinheiten wird anhand der Dringlichkeitswerte wieder neu angepasst.

Gemäß der vorliegenden Erfindung ist vorteilhafterweise vorgesehen, dass die Zustandsdaten einen Zeitpunkt der Anfrage der Bodenreinigungseinheit, eine Position der Bodenreinigungseinheit auf einer Raumkarte, einen Ladestand einer Batterie/eines Akkus der Bodenreinigungseinheit, einen Füllstand eines Staubbehälters der Bodenreinigungseinheit, eine Größe der noch ausstehenden zu reinigenden Raumflächen, eine Dauer der noch ausstehenden Reinigungszeit, eine Entfernung zur Reinigungsstation, einen Füllstand eines Wassertanks undloder einen Betriebsstatus der Bodenreinigungseinheit umfassen. Die Zustandsdaten umfassen vorzugsweise sämtliche Daten, die für die Ermittlung des Dringlichkeitswertes von Belang sind.

Vorteilhafterweise bekommen die Zustandsdaten jeweils einen Prioritätswert zugeordnet. Der Prioritätswert trifft eine Aussage darüber, in welchem Maße der jeweilige Zustandsdatenwert den Dringlichkeitswert beeinflusst, wobei ein niedrigerer Prioritätswert mit einem höheren Einfluss auf den Dringlichkeiteswert korreliert und umgekehrt. Der niedrigste Prioritätswert kann insbesondere 1 sein. Als Beispiel sei hier angeführt, dass die Restzeit zur Reinigung beispielsweise einen Prioritätswert von 1 aufweist und die Entfernung zur Station einen Prioritätswert von 2. Zwei Bodenreinigungseinheiten, die für Zustandsdaten mit dem Prioritätswert 1 die gleichen Zustandsdatenwerte aufweisen, werden beispielsweise anhand von Zustandsdatenwerten von Zustandsdaten mit dem Prioritätswerts 2 in eine Reihenfolge zur Bearbeitung mittels der Reinigungsstation einsortiert. Die Zuordnung der Prioritätswerte zu den Zustandsdaten kann vorteilhafterweise vom Anwender selbst festgelegt werden.

Eine vorteilhafte Ausgestaltung der Erfindung sieht vor, dass die zentrale Recheneinheit Befehle in Form von Positionszuweisungen oder Geschwindigkeitsanpassungen an zumindest eine Bodenreinigungseinheit übermittelt. Die an die Bodenreinigungseinheiten übermittelten Befehle bewirken, dass die Reinigungsstation in der festgelegten Reihenfolge von den entsprechenden Bodenreinigungseinheiten angefahren wird. Mittels der Geschwindigkeitsanpassungen kann beispielsweise bewirkt werden, dass die Geschwindigkeiten der Bodenreinigungseinheiten derart angepasst werden, dass diese die Reinigungsstation genau in dem Moment erreichen, wenn sie an Position 1 der Warteliste stehen und die Reinigungsstation frei wird.

Alternativ oder zusätzlich ist vorgesehen, dass die zentrale Recheneinheit Befehle in Form von Positionszuweisungen an zumindest eine Bodenreinigungseinheit übermittelt. Vorteilhafterweise bewirkt die Positionszuweisung, dass eine jeweilige Bodenreinigungseinheit die Reinigungsstation oder eine entsprechende Parkfläche anfährt. Das Bodenreinigungssystem weist vorzugsweise für jede Bodenreinigungseinheit eine Parkfläche auf. Die Zuordnung einer Parkfläche erfolgt vorzugsweise derart, dass jeder Bodenreinigungseinheit eine konkrete Parkfläche des Bodenreinigungssystems zugeordnet ist oder die jeweilige Parkfläche anhand des Dringlichkeitwertes der Bodenreinigungseinheit vergeben wird. Vorteilhafterweise ändert die entsprechende Bodenreinigungseinheit ihre Parkfläche nicht mehr nachdem sie diese erreicht hat, sondern würde zum entsprechenden Zeitpunkt an die Reinigungsstation fahren. Wird die Reinigungsstation frei, fährt die Bodenreinigungseinheite mit dem höchsten Dringlichkeitswert von der Parkfläche an die Reinigungsstation.

Ob die Reinigungsstation frei oder belegt ist, kann die Recheneinheit anhand der Positionen der jeweiligen Bodenreinigungseinheit ermitteln. Das heißt, wenn eine Bodenreinigungseinheit an die Reinigungsstation angedockt ist, ermittelt die Recheneinheit anhand der entsprechenden Bodenreinigungseinheit, dass die Reinigungsstation belegt ist.

Alternativ oder zusätzlich sieht eine erfindungsgemäße Weiterentwicklung vor, dass die zentrale Recheneinheit Zustandsdaten, vorzugsweise in Form von einem Belegungsstatus, von der Reinigungsstation empfängt. Übersendet die Reinigungsstation der zentralen Recheneinheit, dass sie frei ist, kann die zentrale Recheneinheit der entsprechend nächsten Bodenreinigungseinheit Befehle zukommen lassen, sodass diese Bodenreinigungseinheit die Reinigungsstation anfährt.

Ferner ist es besonders von Vorteil, wenn die von der zentralen Recheneinheit erfassten Informationen auf mindestens einem Speichermedium gespeichert werden, auf welches die zentrale Recheneinheit zugreifen kann, wobei das Speichermedium von einem Dezentralspeicher, insbesondere einem lokalen Speicherlaufwerk, undloder einem Zentralspeicher, insbesondere einem über das Internet erreichbaren Online-Speicher, gebildet sein kann. Die Informationen in Form von Zustandsdaten undloder Dringlichkeitswerten können auf dem Speichermedium gespeichert werden. Anschließend kann die entsprechende Recheneinheit auf das Speichermedium zugreifen und die Informationen weiterverarbeiten. Ebenfalls ist es denkbar, dass Raumkarten auf dem Speichermedium abgespeichert sind, auf die die Bodenreinigungseinheiten und/oder Recheneinheiten Zugriff haben.

Die jeweiligen Bodenreinigungseinheiten undloder die Reinigungsstation können jeweils ein dezentrales Speichermedium aufweisen. Alternativ ist es denkbar, dass ein Zentralspeicher, beispielsweise ein Online-Speicher, dem Bodenreinigungssystem zugeordnet ist.

Eine vorteilhafte Ausgestaltung der Erfindung sieht vor, dass eine Übertragung von Informationen undloder Befehlen zwischen der zentralen Recheneinheit und den Bodenreinigungseinheiten undloder der Reinigungsstation kabellos, insbesondere über W-LAN, erfolgt. W-LAN gehört zu den Übertragungsnetzen, die in der Regel in sämtlichen Gebäudekomplexen vorhanden sind, weshalb somit kein anderes Übertragungsnetzwerk installiert werden muss. Ferner ist über W-LAN die Übermittlung von Informationen und Befehlen über eine ausreichende Distanz möglich.

Schließlich ist vorgesehen, dass eine jeweilige Bodenreinigungseinheit, die mittels der Reinigungsstation bearbeitet wird, während der Bearbeitung gleichzeitig von der Reinigungsstation geladen wird. Mit anderen Worten kann die Reinigungsstation auch eine Ladefunktion übernehmen, um die Batterie/Akku der jeweiligen Reinigungseinheit zumindest teilweise wieder aufzuladen. Dies erfolgt vorzugsweise über einen Zeitraum von 5 Minuten bis 30 Minuten, vorzugsweise über einen Zeitraum von 10 Minuten bis 20 Minuten. Zur Erfüllung der Ladefunktion weist die Reinigungsstation vorteilhafterweise eine Ladeeinheit auf. Dies bringt den Vorteil mit sich, dass Bodenreinigungseinheiten deren Ladezustand sehr gering ist und somit gegebenenfalls nicht mehr zurück an ihre Ladestation fahren können, über einen kurzen Zeitraum von der Reinigungsstation geladen werden können. Nach Anfahren der Reinigungsstation weisen die Bodenreinigungseinheiten vorzugsweise einen Ladestand auf, der es ermöglicht, dass die Bodenreinigungseinheiten wieder zurück an ihre entsprechende Ladestation fahren können. Auch kann das kurzzeitige Wiederaufladen sinnvoll sein, um eine womöglich nur noch geringe verbleibende Restfläche bearbeiten zu können, ohne zuvor noch die Ladestation anfahren zu müssen.

Ausführungsbeispiele der Erfindung sind in den Zeichnungen rein schematisch dargestellt und werden nachfolgend näher beschrieben. Es zeigt:
- Figur 1: schematische Darstellung eines erfindungsgemäßen Bodenreinigungssystems,
- Figur 2: prinzipbedingte Skizze einer alternativen Ausführungsform eines erfindungsgemäßen Bodenreinigungssystems,
- Figur 3: geometrische Muster zur Anordnung von Parkflächen verschiedener Bodenreinigungssysteme,
- Figur 4: Wartliste eines erfindungsgemäßen Bodenreiniungssystems gemäß Figur 1.

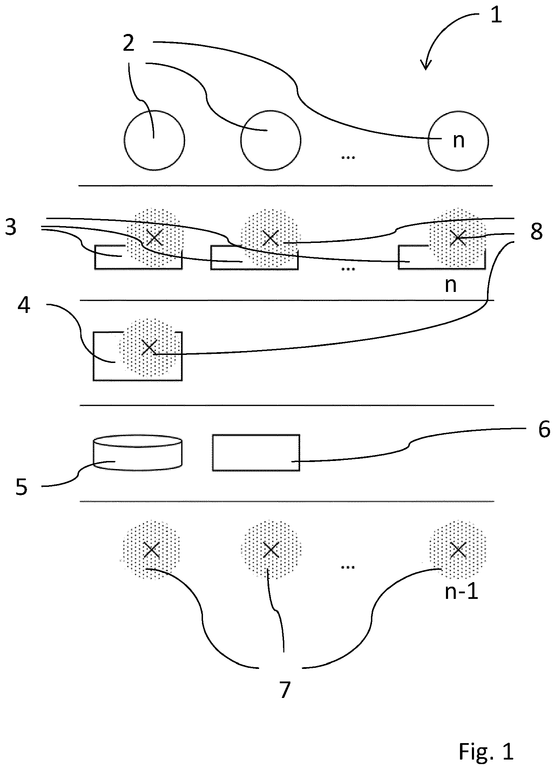

In der **Figur 1** ist ein Bodenreinigungssystem **1** schematisch dargestellt. Aufgabe des Bodenreinigungssystems **1** ist es, eine hier nicht dargestellte Fläche zu reinigen. Das Bodenreinigungssystem **1** umfasst eine Anzahl n Bodenreinigungseinheiten **2,** eine Anzahl n Ladestationen **3,** wobei jeder Bodenreinigungseinheit **2** jeweils eine Ladestation **3** zugeordnet ist, eine Reinigungsstation **4,** eine zentrale Recheneinheit **5** sowie ein Speichermedium in Form eines Zentralspeichers **6.**

Vorteilhafterweise beträgt die Zahl n sieben. Das heißt, dass das Bodenreinigungssystem **1** sieben Bodenreinigungseinheiten **2** und sieben Ladestationen **3** aufweist. Die sieben Bodenreinigungseinheiten **2** werden alle von der gleichen Reinigungsstation **4** gereinigt.

Ferner weist das Bodenreinigungssystem **1** eine Anzahl n-1 Parkflächen **7** auf. Im vorliegenden Fall heißt dies, dass das Bodenreinigungssystem **1** sechs Parkflächen **7** aufweist.

Die mit einem X versehenen Flächen stellen Positionen **8** dar, an denen eine Bodenreinigungseinheit **2** parken oder andocken kann.

Die zentrale Recheneinheit **5** erfasst Informationen in Form von Zustandsdaten der jeweiligen Bodenreinigungseinheit **2.** Die Informationen werden auf dem Zentralspeicher **6** gespeichert, auf den die zentrale Recheneinheit **5** Zugriff hat. Anhand dieser Zustandsdaten ermittelt die Recheneinheit **5** einen Dringlichkeitswert. Dieser Dringlichkeitswert trifft eine Aussage, über die Dringlichkeit zur Bearbeitung der betroffenen Bodenreinigungseinheit **2** mittels der Reinigungsstation **4.** Die Recheneinheit **5** legt auf Basis der Dringlichkeitswerte eine Reihenfolge fest, in der die betroffenen Bodenreinigungseinheiten **2** mittels der Reinigungsstation **4** bearbeitet werden sollen.

Die Zustandsdaten betreffen beispielweise einen Zeitpunkt der Anfrage der Bodenreinigungseinheit, eine Position der Bodenreinigungseinheit auf einer Raumkarte, einen Ladestand einer Batterie der Bodenreinigungseinheit, einen Füllstand eines Staubbehälters der Bodenreinigungseinheit , eine Größe der noch ausstehenden zu reinigenden Raumflächen, eine Dauer der noch ausstehenden Reinigungszeit, eine Entfernung zur Reinigungsstation, einen Füllstand eines Wassertanks undloder einen Betriebsstatus der Bodenreinigungseinheit

Die zentrale Recheneinheit **5** übermittelt Befehle an die Bodenreinigungseinheiten **2,** wobei die Befehle eine Positionszuweisung enthalten. Das heißt, dass die Recheneinheit **5** der entsprechenden Bodenreinigungseinheit **2** mitteilt, ob diese die Reinigungsstation **4** anfahren oder sich auf eine ihr zugeordnete Parkfläche **7** begeben soll. Wenn die Reinigungsstation **4** derzeit belegt ist, werden die entsprechend anderen betroffenen Bodenreinigungseinheiten **2** einer Parkfläche **7** zugewiesen.

Der Zustand der Reinigungsstation **4,** also ob die Reinigungsstation **4** belegt oder frei ist, wird der zentralen Recheneinheit **5** über die Zustandsdaten der Bodenreinigungseinheiten **2** mitgeteilt. Befindet sich eine Bodenreinigungseinheit **2** an der Reinigungsstation **4** wird der zentralen Recheneinheit **5** mitgeteilt, dass die Reinigungsstation **4** belegt ist.

Die zentrale Recheneinheit **5** legt eine Neuordnung der Reihenfolge angesichts neuer undloder geänderter Dringlichkeitswerte fest. Das heißt, dass die Reihenfolge der zu bearbeitenden Bodenreinigungseinheiten **2** fortlaufend anhand der neu undloder sich ändernden Dringlichkeitswerte geändert wird.

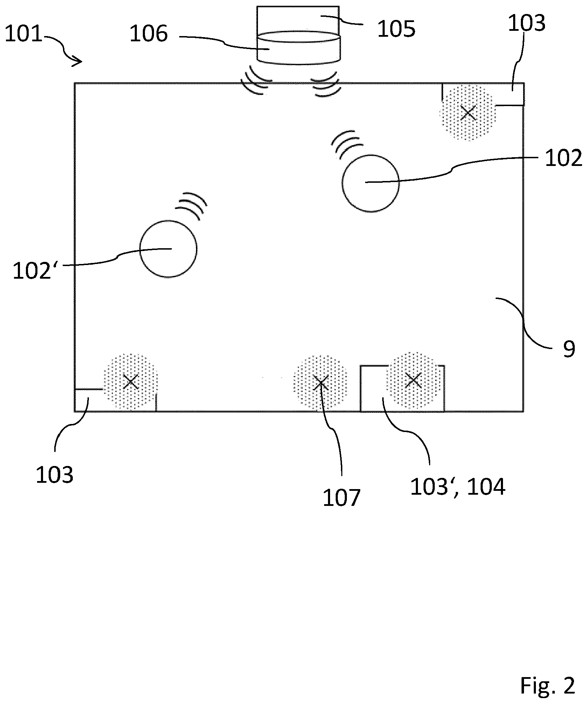

In der **Figur 2** wird ein Beispiel eines erfindungsgemäßen Bodenreinigungssystems **101** dargestellt. Mittels des Bodenreinigungssystems **101** kann eine Fläche **9** gereinigt werden. Das Bodenreinigungssystem **101** weist zwei Bodenreinigungseinheiten **102, 102',** zwei Ladestationen **103,** eine Reinigungsstation **104,** eine Parkfläche **107** sowie eine zentrale Recheneinheit **105** und ein Speichermedium in Form eines Zentralspeichers **106** auf. Die Bodenreinigungseinheiten **102, 102'** übermitteln die Informationen in Form von Zustandsdaten an die zentrale Recheneinheit **105,** die die Zustandsdaten erfasst. Die Zustandsdaten werden erst dann an die zentrale Recheneinheit **105** übermittelt, wenn zumindest ein kritischer Zustandsdatenwert eine Dringlichkeitsschwell erreicht hat. Im vorliegenden Ausführungsbeispiel werden die Informationen erst dann an die zentrale Recheneinheit **105** übermittelt, wenn einer der kritischen Zustandsdatenwerte mindestens 90 % eines die Bearbeitung mittels der Reinigungsstation notwendig machenden Extremums erreicht hat. Wenn ein Staubbehälter der Bodenreinigungseinheit **102, 102'** zu mindestens 90% gefüllt ist oder Sensorik oder Bürsten zu mindestens 90% verschmutzt ist, werden die Zustandsdaten der entsprechenden Bodenreinigungseinheit **102, 102'** an die zentrale Recheneinheit **105** übermittelt.

Die Zustandsdaten werden auf dem Zentralspeicher **106** zwischengespeichert werden. Die Recheneinheit **105** ermittelt den Dringlichkeitswert, der eine Aussage über die Dringlichkeit zur Bearbeitung der entsprechenden Bodenreinigungseinheiten **102, 102'** mittels der Reinigungsstation **104** macht.

Anhand dieses Dringlichkeitswertes legt die Recheneinheit **105** fest in welcher Reihenfolge die beiden Bodenreinigungseinheit **102, 102'** die Reinigungsstation **104** anfahren. Sowohl der Dringlichkeitswert als auch die Reihenfolge können auf dem Zentralspeicher **106** zwischengespeichert werden.

Die Recheneinheit **105** übermittelt Befehle an die Bodenreinigungseinheiten **102, 102'.** Die Befehle enthalten eine Positionszuweisung. Im vorliegenden Ausführungsbeispiel heißt dies, dass die Bodenreinigungseinheit **102** mit dem höheren Dringlichkeitswert an die Reinigungsstation **104** fahren soll und die Bodenreinigungseinheit **102'** mit dem niedrigeren Dringlichkeitswert die Parkfläche **107** anfährt. Sobald der Recheneinheit **105** mitgeteilt wird, dass die Reinigungsstation **104** frei ist, kann die zweite Bodenreinigungseinheit **102',** mit dem nunmehr höheren Dringlichkeitswert, an die Reinigungsstation **104** andocken.

Eine Übertragung der Informationen und der Befehle zwischen den Bodenreinigungseinheiten **102, 102'** und der Recheneinheit **105** erfolgt über eine kabellose Verbindung in Form von W-Lan.

Sollte ein Ladezustand zumindest einer der beiden Bodenreinigungseinheiten **102, 102'** beim Anfahren der Reinigungsstation **104** derart leer sein, dass die entsprechende Bodenreinigungseinheit **102, 102'** nicht mehr zurück zu ihrer Ladestation **103** fahren kann, wird diese Bodenreinigungseinheit **102, 102'** von der Reinigungstation **104,** die ebenfalls eine Ladestation **103'** beinhaltet, über einen kurzen Zeitraum von 10 bis 15 Minuten aufgeladen oder die Bodenreinigungseinheit **102, 102'** wird auf einer Parkposition zwischengeparkt bis alle anderen Bodenreinigungseinheiten von der Reinigungsstation **104** versorgt wurden bevor diese an der Reinigungsstation **104** aufgeladen wird.

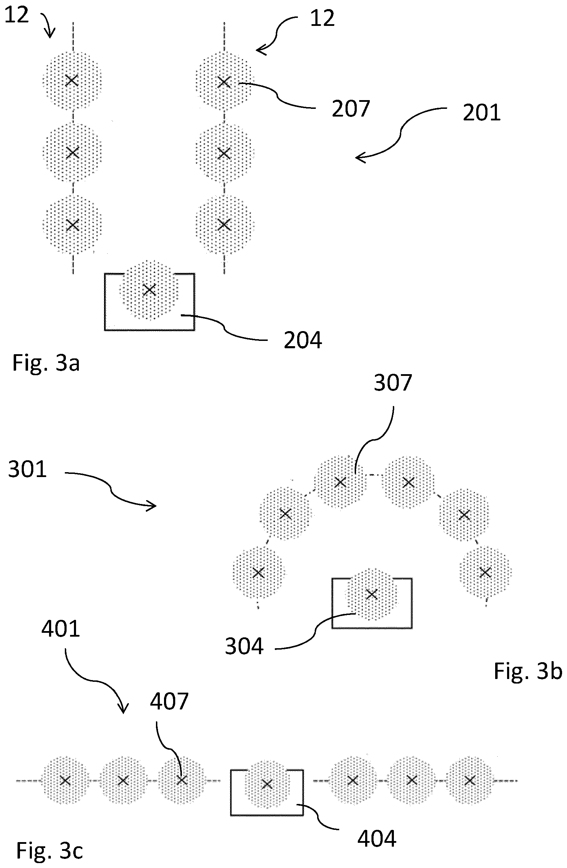

In **Figur 3a bis 3c** werden drei Bodenreinigungssysteme **201, 301, 401** mit unterschiedlich angeordneten Parkflächen **207, 307, 407** dargestellt. Die jeweilige Reinigungsstation **204, 304 404** sind mittig zu den Parkflächen **207, 307, 407** angeordnet. In der **Figur 3a** werden zwei parallel zueinander angeordnete Reihen **12** mit jeweils drei Parkflächen **207** dargestellt. Die **Figur 3b** zeigt halbkreisförmig um die Reinigungsstation **304** angeordnete Parkflächen **307.** In der **Figur 3c** sind jeweils drei Parkflächen **407** benachbart zu der Reinigungsstation **404** angeordnet, wobei die Parkflächen **407** in einer Reihe mit der Reinigungsstation **404** stehen.

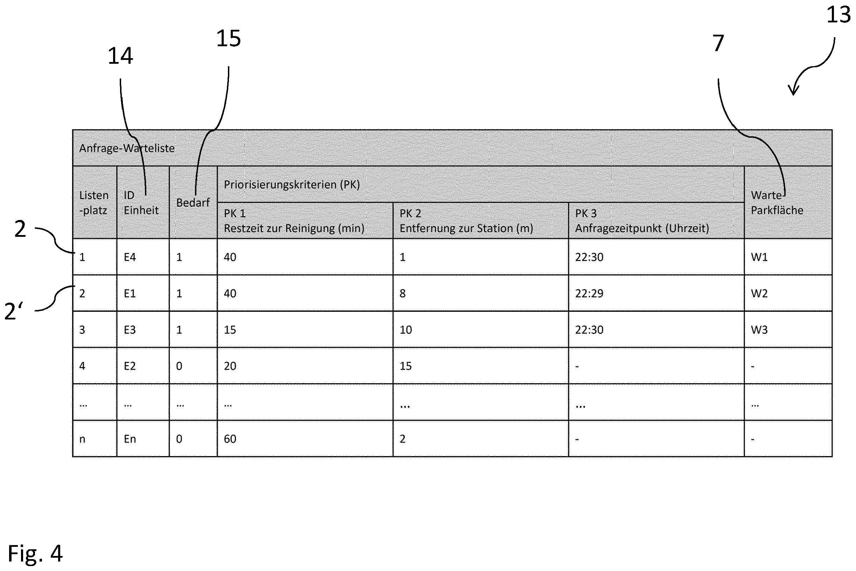

Die **Figur 4** zeigt ein Beispiel einer Warteliste **13** eines erfindungsgemäßen Bodenreinigungssystems **1** gemäß **Figur 1****,** die eine Reihenfolge der zu bearbeitenden Bodenreinigungseinheiten **2, 2'** wiedergibt. Jede Bodenreinigungseinheit **2, 2'** weist ein festes Kennzeichen **14** in Form einer ID auf. Wie der Warteliste **13** zu entnehmen ist, kann eine Bodenreinigungseinheit **2, 2'** einen Bedarf **15** anmelden. Die Zustandsdaten betreffen im vorliegenden Ausführungsbeispiel die Restzeit zur Reinigung der Fläche, die Entfernung zur Station und den Anfragezeitpunkt. Den Zustandsdaten ist jeweils ein Prioritätswert zugeordnet. Der Prioritätswert trifft eine Aussage darüber, in welchem Maße der jeweilige Zustandsdatenwert den Dringlichkeitswert beeinflusst. Ein niedrigerer Prioritätswert mit einem höheren Einfluss auf den Dringlichkeitswert korreliert und ein höherer Prioritätswert mit einem niedrigeren Einfluss auf den Dringlichtkeitswert korreliert. Die Restzeit zur Reinigung weist den Prioritätswert 1 auf, die Entfernung zur Station den Prioritätswert 2 und der Anfragezeitraum den Prioritätswert 3. Das heißt, dass zunächst eine Reihenfolge der Bodenreinigungseinheit **2, 2'** anhand der Restzeit zur Reinigung festgelegt wird. Sollten die Zustandsdatenwerte der Restzeit zur Reinigung zweier Bodenreinigungseinheiten **2, 2'** identisch sein, wird die Entfernung zur Reinigungsstation mit dem Prioritätswert 2 herbeigezogen, anhand dessen die Reihenfolge festgelegt wird. Wenn auch diese beiden Zustandsdatenwerte der beiden Bodenreinigungseinheiten **2, 2'** identisch sein sollten, wird nach dem Anfragezeitpunkt geschaut, der den Prioritätswert 3 aufweist. Anhand der nunmehr ermittelten Reihenfolge wird den betroffenen Bodenreinigungseinheiten **2, 2'** eine Parkfläche **7** zugeordnet.

### Bezugszeichenliste

- 1, 101, 201, 301, 401: Bodenreinigungssystem
- 2, 2', 102, 102': Bodenreinigungseinheit
- 3, 103: Ladestation
- 4, 104: Reinigungsstation
- 5, 105: Recheneinheit
- 6, 106: Zentralspeicher
- 7, 107, 207, 307, 407: Parkfläche
- 8: Position
- 9: Fläche
- 12: Reihe
- 13: Warteliste
- 14: Kennzeichen
- 15: Bedarf

## Patentansprüche

1. Verfahren zur Reinigung einer Fläche mittels eines Bodenreinigungssystems (1, 101, 201, 301, 401),
wobei das Bodenreinigungssystem (1, 101, 201, 301, 401)
- zumindest zwei autonome Bodenreinigungseinheiten (2, 2', 102, 102'),
- zumindest eine Ladestation (3, 103),
- zumindest eine Reinigungsstation (4, 104) und
- zumindest eine Recheneinheit,
aufweist, umfassend die nachfolgenden Verfahrensschritte:
a) Eine zentrale Recheneinheit (5, 105) erfasst Informationen der Bodenreinigungseinheiten (2, 2', 102, 102');
b) Die zentrale Recheneinheit (5, 105) verarbeitet die Informationen, und zwar derart, dass eine Reihenfolge festgelegt wird, in der die betroffenen Bodenreinigungseinheiten (2, 2', 102, 102') mittels der Reinigungsstation (4, 104) bearbeitet werden sollen;
c) Die zentrale Recheneinheit (5, 105) übermittelt Befehle an die betroffenen Bodenreinigungseinheiten (2, 2', 102, 102'), sodass diese die Reinigungstation (4, 104) in der festgelegten Reihenfolge anfahren.

2. Verfahren nach Anspruch 1, **dadurch gekennzeichnet, dass** die von der zentralen Recheneinheit (5, 105) erfassten Informationen Zustandsdaten der Bodenreinigungseinheiten (2, 2', 102, 102`) umfassen, wobei die Recheneinheit (5, 105) anhand dieser Zustandsdaten einen Dringlichkeitswert jeder Bodenreinigungseinheit (2, 2', 102, 102') ermittelt, der eine Aussage über die Dringlichkeit zur Bearbeitung der jeweiligen Bodenreinigungseinheit (2, 2', 102, 102') mittels der Reinigungsstation (4, 104) macht.

3. Verfahren nach Anspruch 1, **dadurch gekennzeichnet, dass** die von der zentralen Recheneinheit erfassten Informationen Dringlichkeitswerte umfassen, wobei die Bodenreinigungseinheiten jeweils eine ihnen zugeordnete dezentrale Recheneinheit aufweisen, wobei die dezentralen Recheneinheiten jeweils Zustandsdaten der ihr zugeordneten Bodenreinigungseinheiten erfassen, wobei die dezentralen Recheneinheiten aus diesen Zustandsdaten jeweils einen Dringlichkeitswert ermitteln, der eine Aussage über die Dringlichkeit zur Bearbeitung der jeweiligen Bodenreinigungseinheit mittels der Reinigungsstation macht, und wobei die Dringlichkeitswerte jeweils als Information an die zentrale Recheneinheit übermittelt werden.

4. Verfahren nach Anspruch 2 oder 3, **dadurch gekennzeichnet, dass** die Informationen einer Bodenreinigungseinheit (2, 2', 102, 102') erst dann an die zentrale Recheneinheit (5, 105) übermittelt werden, wenn zumindest ein kritischer Zustandsdatenwert eine zuvor festgelegte Dringlichkeitsschwelle erreicht hat, wobei vorzugsweise die Dringlichkeitsschwelle dann erreicht ist, wenn der jeweilige kritische Zustandsdatenwert mindestens 75 %, vorzugsweise mindestes 85 %, weiter vorzugsweise mindestes 90 %, eines die Bearbeitung mittels der Reinigungsstation notwendig machenden Extremums erreicht hat.

5. Verfahren nach einem der vorhergehenden Ansprüche, **dadurch gekennzeichnet, dass** die zentrale Recheneinheit (5, 105) angesichts neuer und/oder geänderter Dringlichkeitswerte eine Neuordnung die Reihenfolge neu festlegt.

6. Verfahren nach einem der Ansprüche 2 bis 5, **dadurch gekennzeichnet, dass** die Zustandsdaten einen Zeitpunkt der Anfrage der Bodenreinigungseinheit (2, 2', 102, 102'), eine Position der Bodenreinigungseinheit (2, 2', 102, 102') auf einer Raumkarte, einen Ladestand einer Batterie der Bodenreinigungseinheit (2, 2', 102, 102'), einen Füllstand eines Staubbehälters der Bodenreinigungseinheit (2, 2', 102, 102'), eine Größe der noch ausstehenden zu reinigenden Raumflächen, eine Dauer der noch ausstehenden Reinigungszeit, eine Entfernung zur Reinigungsstation, einen Füllstand eines Wassertanks undloder einen Betriebsstatus der Bodenreinigungseinheit umfassen.

7. Verfahren nach einem der vorhergehenden Ansprüche, **dadurch gekennzeichnet, dass** die von der zentralen Recheneinheit (5, 105) erfassten Informationen auf mindestens einem Speichermedium gespeichert werden, auf welches die zentrale Recheneinheit zugreifen kann, wobei das Speichermedium von einem Dezentralspeicher, insbesondere einem lokalen Speicherlaufwerk, undloder einem Zentralspeicher (6, 106), insbesondere einem über das Internet erreichbaren Online-Speicher, gebildet sein kann.

8. Verfahren nach einem der vorhergehenden Ansprüche, **dadurch gekennzeichnet, dass** die Recheneinheit (5, 105) Befehle in Form von Positionszuweisungen oder Geschwindigkeitsanpassungen an zumindest eine Bodenreinigungseinheit (2, 2', 102, 102') übermittelt.

9. Verfahren nach Anspruch 8, **dadurch gekennzeichnet, dass** die Positionszuweisung derart erfolgt, dass eine jeweilige Bodenreinigungseinheit (2, 2', 102, 102') die Reinigungsstation (4, 104) oder eine Parkfläche (7, 107, 207, 307, 407) anfährt.

10. Verfahren nach einem der vorhergehenden Ansprüche, **dadurch gekennzeichnet, dass** die zentrale Recheneinheit Zustandsdaten, vorzugsweise in Form von einem Belegungsstatus, von der Reinigungsstation empfängt.

11. Verfahren nach einem der vorhergehenden Ansprüche, **dadurch gekennzeichnet, dass** eine Übertragung von Informationen undloder Befehlen zwischen der zentralen Recheneinheit (5, 105) und den Bodenreinigungseinheiten (2, 2', 102, 102') undloder der Reinigungsstation (4, 104) kabellos, insbesondere über W-LAN, erfolgt.

12. Verfahren nach einem der vorhergehenden Ansprüche, **dadurch gekennzeichnet, dass** Reinigungseinheiten (5, 105), die mittels der Reinigungsstration bearbeitet werden, über einen Zeitraum von 5 min bis 30 min, vorzugsweise über einen Zeitraum von 10 min bis 20 min, von der Reinigungsstation (4, 104) geladen werden.

## Claims

1. Method for cleaning a surface by means of a floor cleaning system (1, 101, 201, 301, 401),
wherein the floor cleaning system (1, 101, 201, 301, 401) has
- at least two autonomous floor cleaning units (2, 2', 102, 102'),
- at least one charging station (3, 103),
- at least one cleaning station (4, 104) and
- at least one computing unit,
comprising the following method steps:
a) a central computing unit (5, 105) acquires information regarding the floor cleaning units (2, 2', 102, 102');
b) the central computing unit (5, 105) processes the information, specifically such that a sequence in which the relevant floor cleaning units (2, 2', 102, 102') are to be processed by means of the cleaning station (4, 104) is defined;
c) the central computing unit (5, 105) transmits commands to the relevant floor cleaning units (2, 2', 102, 102'), so that they approach the cleaning station (4, 104) in the defined sequence.

2. Method according to claim 1, **characterised in that** the information acquired by the central computing unit (5, 105) comprises state data of the floor cleaning units (2, 2', 102, 102'), the computing unit (5, 105) determining a urgency value of each floor cleaning unit (2, 2', 102, 102') on the basis of these state data, which value indicates the urgency for processing the relevant floor cleaning unit (2, 2', 102, 102') by means of the cleaning station (4, 104).

3. Method according to claim 1, **characterised in that** the information acquired by the central computing unit comprises urgency values, the floor cleaning units each having a decentralised computing unit assigned thereto, the decentralised processing units each acquiring state data of the floor cleaning units assigned thereto, the decentralised processing units each determining an urgency value from these state data, which value indicates the urgency for processing the relevant floor cleaning unit by means of the cleaning station, and the urgency values each being transmitted as information to the central computing unit.

4. Method according to either claim 2 or claim 3, **characterised in that** the information regarding a floor cleaning unit (2, 2', 102, 102') is only then transmitted to the central computing unit (5, 105) when at least one critical state data value has reached a predetermined urgency threshold, the urgency threshold preferably being reached when the relevant critical state data value has reached at least 75%, preferably at least 85%, more preferably at least 90%, of an extremum that makes processing by means of the cleaning station necessary.

5. Method according to any of the preceding claims, **characterised in that** the central computing unit (5, 105) redefines a new order the sequence in view of new and/or changed urgency values.

6. Method according to any of claims 2 to 5, **characterised in that** the state data comprise a time of the request of the floor cleaning unit (2, 2', 102, 102'), a position of the floor cleaning unit (2, 2', 102, 102') on a room map, a charge level of a battery of the floor cleaning unit (2, 2', 102, 102'), a fill level of a dust container of the floor cleaning unit (2, 2', 102, 102'), a size of the room surfaces that are still to be cleaned, a duration of the remaining cleaning time, a distance to the cleaning station, a fill level of a water tank and/or an operating status of the floor cleaning unit.

7. Method according to any of the preceding claims, **characterised in that** the information acquired by the central computing unit (5, 105) is stored on at least one storage medium which the central computing unit can access, it being possible for the storage medium to be formed by a decentralised memory, in particular a local storage drive, and/or a central memory (6, 106), in particular an online memory which can be reached via the Internet.

8. Method according to any of the preceding claims, **characterised in that** the computing unit (5, 105) transmits commands in the form of position assignments or speed adjustments to at least one floor cleaning unit (2, 2', 102, 102').

9. Method according to claim 8, **characterised in that** the position assignment takes place in such a way that a relevant floor cleaning unit (2, 2', 102, 102') approaches the cleaning station (4, 104) or a parking area (7, 107, 207, 307, 407).

10. Method according to any of the preceding claims, **characterised in that** the central computing unit receives state data, preferably in the form of an occupation status, from the cleaning station.

11. Method according to any of the preceding claims, **characterised in that** a transmission of information and/or commands between the central computing unit (5, 105) and the floor cleaning units (2, 2', 102, 102') and/or the cleaning station (4, 104) takes place wirelessly, in particular via W-LAN.

12. Method according to any of the preceding claims, **characterised in that** cleaning units (5, 105) which are processed by means of the cleaning station are charged by the cleaning station (4, 104) over a period of 5 min to 30 min, preferably over a period of 10 min to 20 min.

## Revendications

1. Procédé permettant le nettoyage d'une surface à l'aide d'un système de nettoyage du sol (1, 101, 201, 301, 401),
le système de nettoyage du sol (1, 101, 201, 301, 401) présentant
- au moins deux unités de nettoyage du sol (2, 2', 102, 102') autonomes,
- au moins une station de charge (3, 103),
- au moins une station de nettoyage (4, 104) et
- au moins une unité de calcul,
comprenant les étapes de procédé suivantes :
a) Une unité de calcul (5, 105) centrale détecte des informations des unités de nettoyage du sol (2, 2', 102, 102') ;
b) L'unité de calcul (5, 105) centrale traite les informations, et ce de manière à définir un ordre dans lequel les unités de nettoyage du sol (2, 2', 102, 102') concernées doivent être traitées à l'aide de la station de nettoyage (4, 104) ;
c) L'unité de calcul (5, 105) centrale transmet des instructions aux unités de nettoyage du sol (2, 2', 102, 102') concernées afin que celles-ci se rendent à la station de nettoyage (4, 104) dans l'ordre défini.

2. Procédé selon la revendication 1, **caractérisé en ce que** les informations détectées par l'unité de calcul (5, 105) centrale comprennent des données d'état des unités de nettoyage du sol (2, 2', 102, 102'), l'unité de calcul (5, 105) déterminant, à l'aide desdites données d'état, une valeur d'urgence de chaque unité de nettoyage du sol (2, 2', 102, 102'), laquelle valeur d'urgence donne une indication concernant l'urgence du traitement de l'unité de nettoyage du sol (2, 2', 102, 102') respective à l'aide de la station de nettoyage (4, 104).

3. Procédé selon la revendication 1, **caractérisé en ce que** les informations détectées par l'unité de calcul centrale comprennent des valeurs d'urgence, les unités de nettoyage du sol présentant respectivement une unité de calcul décentralisée qui leur est associée, les unités de calcul décentralisées détectant respectivement des données d'état des unités de nettoyage du sol qui leur sont associées, les unités de calcul décentralisées déterminant, à partir desdites données d'état, respectivement une valeur d'urgence qui donne une indication concernant l'urgence du traitement de l'unité de nettoyage du sol respective à l'aide de la station de nettoyage, et les valeurs d'urgence étant respectivement transmises à l'unité de calcul centrale sous forme d'informations.

4. Procédé selon la revendication 2 ou 3, **caractérisé en ce que** les informations d'une unité de nettoyage du sol (2, 2', 102, 102') ne sont transmises à l'unité de calcul (5, 105) centrale que lorsqu'au moins une valeur de données d'état critique a atteint un seuil d'urgence défini au préalable, le seuil d'urgence étant de préférence atteint lorsque la valeur de données d'état critique respective a atteint au moins 75 %, de préférence au moins 85 %, plus préférablement au moins 90 %, d'un extrême rendant nécessaire le traitement à l'aide de la station de nettoyage.

5. Procédé selon l'une des revendications précédentes,
**caractérisé en ce que** l'unité de calcul (5, 105) centrale redéfinit une réorganisation de l'ordre au vu de nouvelles valeurs d'urgence et/ou de valeurs d'urgence modifiées.

6. Procédé selon l'une des revendications 2 à 5, **caractérisé en ce que** les données d'état comprennent un moment de demande de l'unité de nettoyage du sol (2, 2', 102, 102'), une position de l'unité de nettoyage du sol (2, 2', 102, 102') sur une carte de l'espace, un état de charge d'une batterie de l'unité de nettoyage du sol (2, 2', 102, 102'), un niveau de remplissage d'un réservoir à poussières de l'unité de nettoyage du sol (2, 2', 102, 102'), une taille des surfaces spatiales restantes à nettoyer, une durée du temps de nettoyage restant, une distance par rapport à la station de nettoyage, un niveau de remplissage d'un réservoir d'eau et/ou un état de fonctionnement de l'unité de nettoyage du sol.

7. Procédé selon l'une des revendications précédentes, **caractérisé en ce que** les informations détectées par l'unité de calcul (5, 105) centrale sont stockées sur au moins un support de stockage auquel l'unité de calcul centrale peut accéder, le support de stockage pouvant être formé par une mémoire décentralisée, en particulier un lecteur de stockage local, et/ou une mémoire centrale (6, 106), en particulier une mémoire en ligne accessible par l'intermédiaire d'Internet.

8. Procédé selon l'une des revendications précédentes,
**caractérisé en ce que** l'unité de calcul (5, 105) transmet des instructions sous la forme d'attributions de position ou d'adaptations de vitesse à au moins une unité de nettoyage du sol (2, 2', 102, 102').

9. Procédé selon la revendication 8, **caractérisé en ce que** l'attribution de position est effectuée de telle sorte qu'une unité de nettoyage du sol (2, 2', 102, 102') respective se rend à la station de nettoyage (4, 104) ou au niveau d'une surface de stationnement (7, 107, 207, 307, 407).

10. Procédé selon l'une des revendications précédentes, **caractérisé en ce que** l'unité de calcul centrale reçoit des données d'état, de préférence sous la forme d'un état d'occupation, en provenance de la station de nettoyage.

11. Procédé selon l'une des revendications précédentes,
**caractérisé en ce qu'**une transmission d'informations et/ou d'instructions entre l'unité de calcul (5, 105) centrale et les unités de nettoyage du sol (2, 2', 102, 102') et/ou la station de nettoyage (4, 104) s'effectue sans fil, en particulier par WLAN.

12. Procédé selon l'une des revendications précédentes,
**caractérisé en ce que** des unités de nettoyage (5, 105) qui sont traitées à l'aide de la station de nettoyage sont chargées par la station de nettoyage (4, 104) pendant une durée de 5 min à 30 min, de préférence pendant une durée de 10 min à 20 min.
